# EUROPÄISCHE PATENTSCHRIFT

(11) **EP 1 808 346 B1**
(45) Veröffentlichungstag und Bekanntmachung des Hinweises auf die Patenterteilung: **25.12.2013**
(21) Anmeldenummer: 07000778.6
(22) Anmeldetag: 16.01.2007
(51) Int. Cl.: B60S 3/06

(54) **Fahrzeugbehandlungsanlage und Behandlungsverfahren für Fahrzeugbehandlungsanlagen**
vehicle treatment system and treating method for vehicle treatment systems
installation de traitement de véhicules et procédé de traitement pour installations de traitement de véhicules

(30) Priorität: 16.01.2006 DE 202006000648 U
(43) Veröffentlichungstag der Anmeldung: 18.07.2007
(73) Patentinhaber: Otto Christ AG, 87734 Benningen (DE)
(72) Erfinder: Christ, Markus, 87700 Memmingen (DE)
(74) Vertreter: Ernicke, Klaus Stefan

(56) Entgegenhaltungen:
- EP-A2- 1 336 541
- DE-A1- 1 530 946
- US-A- 3 104 406
- US-A- 3 237 229
- US-A- 3 432 870
- US-A- 4 059 862
- US-A- 4 305 174
- US-A- 5 177 825

## Beschreibung

Die Erfindung betrifft eine Bürstenanordnung und ein Behandlungsverfahren für Fahrzeugbehandlungsanlagen, insbesondere Fahrzeugwaschanlagen, mit den Merkmalen im Oberbegriff des Verfahrens- und Vorrichtungshauptanspruchs.

Aus der Praxis sind Portalwaschanlagen bekannt, die mit ein oder mehreren Portalen ausgerüstet sind und ein oder mehrere Bürstenanordnungen aufweisen, die jeweils aus einer drehend angetriebenen Bürste und einer Bürstenaufhängung bestehen. Portalwaschanlagen haben üblicherweise eine horizontale Dachbürste und zwei vertikale Seitenbürsten. Für gute Waschergebnisse sind in der Regel zwei Überläufe über das Fahrzeug erforderlich.

Die DE 15 30 946 A1 offenbart ein Verfahren und eine Vorrichtung zum Waschen der Stirn- und Seitenflächen von Fahrzeugen mit einer Bürstenanordnung, die zwei Paare von drehend angetriebenen Bürsten mit einer gemeinsamen Bürstenaufhängung aufweist. Die Bürstenpaare sind an ihren Enden an einem gemeinsamen Träger um eine einzige Achse drehbar gelagert und werden gegenläufig rotierend angetrieben. Der Träger ist über ein Schwenklager mit einem Schwenkarm verbunden, der seinerseits schwenkbar an einem Gestell gelagert ist. Die beiden Schwenkarme sind durch eine Feder miteinander verbunden und werden vom durchfahrenden Fahrzeug zur Seite gedrängt.

Die US 4,059,862 A lehrt eine ähnliche Bürstenanordnung mit Bürstenpaaren oder Tandembürsten, die an einem gemeinsamen Träger drehbar gelagert sind, wobei der Träger über einen doppelten Schwenkarm an einem Gestell angelenkt ist. Die benachbarten Bürsten sind gleichsinnig rotierend angetrieben. Außerdem sind die Bürstenlager als einachsige Drehlager ausgebildet.

Bei der aus der US 3,237,229 A bekannten Bürstenanordnung sind vertikale Seitenbürsten einzeln an Tragarmen gelagert. Die Tragarme mit den einzelnen Bürsten sind schwenkbar an einem Gestell gelagert.

Die US 3,432,870 A befasst sich mit einer Autowaschanlage, bei der drehbare Seitenbürsten mit gegenseitigem Abstand an einem gemeinsamen Träger drehbar gelagert sind, wobei dieser Träger über ein Schwenklager mit einem Schwenkarm verbunden ist, der seinerseits am Gestell gelagert ist.

Die US 3,104,406 A zeigt eine Bürstenanordnung mit Einzelbürsten an jeweils einem eigenen Träger, wobei die beiden Träger über Schwenklager an einem mehrachsig verstellbaren Ausleger angeordnet sind.

Aus der DE 36 16 817 C1 ist eine andere Variante einer Portalwaschanlage bekannt, in der zwei gegeneinander gekehrte Waschportale der vorgenannten Art miteinander fest gekoppelt sind und sich gemeinsam relativ zu dem zu waschenden Fahrzeug bewegen. In jedem der gekoppelten Portale sind dabei jeweils eine Dachbürste und zwei Seitenbürsten einzeln aufgehängt und einzeln beweglich. Die hierdurch entstehende Portalanordnung baut sehr groß und braucht eine entsprechend groß dimensionierte Halle.

Es ist Aufgabe der vorliegenden Erfindung, eine bessere Bürstentechnik aufzuzeigen.

Die Erfindung löst diese Aufgabe mit den Merkmalen im Verfahrens- und Vorrichtungshauptanspruch. Die beanspruchte Bürstenanordnung mit zwei oder mehr gemeinsam aufgehängten Bürsten hat den Vorteil, dass die Bürsten zusammen bewegt werden können und gemeinsam den Behandlungsprozess, insbesondere den Wasch- oder Polierprozess durchführen können.

Die beanspruchte Bürstentechnik hat verschiedene weitere Vorteile. Einerseits bietet sie einen schnelleren Behandlungsprozess, insbesondere eine schnellere Autowäsche, wobei der Prozess mit einem Überlauf über das Fahrzeug auskommen kann. Dies spart Zeit und verkürzt den Prozess. Durch die vergrößerte Bürstenzahl wird auch das Behandlungs-, insbesondere Waschergebnis verbessert. Außerdem lässt sich die beanspruchte Bürstenanordnung in kinematisch und behandlungstechnisch günstiger Weise um das Fahrzeug herum bewegen, wobei der Eingriff und die Wirkung der Bürsten am Fahrzeug verbessert werden. Dies gilt auch bei evtl. Ausweichbewegungen von einzelnen Bürsten innerhalb der Bürstenanordnung.

Ferner ist es günstig, wenn die Bürsten eigenständig angetrieben sind. Sie können sich dadurch optimal an die Prozessbedingungen an ihrem jeweiligen Prozessort anpassen, wobei auch eine eigene Regelung der Bürstendrehzahl vorhanden sein kann. Alternativ kann ein gemeinsamer Bürstenantrieb vorhanden sein, der Platz und Kosten spart.

Außerdem ist es günstig, dass benachbarte Bürsten innerhalb einer Bürstenanordnung gegenläufig drehen. Dies führt einerseits zu einer Stabilisierung der Bürstenanordnung. Andererseits werden Waschschatten am Fahrzeug vermieden. Außerdem ist es möglich, beim Bürstenüberlauf die beaufschlagten Fahrzeugbereiche mit unmittelbar aufeinander folgenden Bürstenberührungen zu behandeln, insbesondere zu waschen oder zu polieren. Die gegenläufige Bürstendrehung ermöglicht es ferner, die Bürsten im Kontaktbereich überlappen zu lassen. Hierdurch entsteht einerseits eine geschlossene Bürstenfront, die für die Fahrzeugbehandlung günstig ist. Andererseits verringert sich der Platzbedarf der Bürstenanordnung. Durch die eng benachbarten Bürsten werden außerdem das Trägheitsverhalten und die Manövrierbarkeit der Bürstenanordnung verbessert. Die Bürstenzustellung an das Fahrzeug lässt sich feinfühliger und besser steuern und in geeigneter Weise über eine Momentenmessung oder auf andere Art regeln.

Die genannten Bürstenanordnungen können in einer Fahrzeugbehandlungsanlage ein- oder mehrfach vorhanden sein. Vorzugsweise sind die Bürsten paarweise angeordnet und bilden Tandembürsten. Die beanspruchten Bürstenanordnung können als Vertikalbürsten und/oder als Horizontalbürsten ausgebildet sein.

Weitere Vorteile der beanspruchten Bürstenanordnung liegen in einer Kostenreduzierung, insbesondere weil die Behandlungs- und Waschergebnisse bei minimalem Bauaufwand optimiert werden. Die Behandlungseffekte sind wie bei einer Doppelportalanlage vorhanden, wobei die Mehrkosten für das zweite Portal und dessen Aggregate eingespart werden können. Ferner ist es möglich, die Einzelbürsten innerhalb einer Bürstenanordnung gemeinsam über einen Bürstenantrieb mit einem Motor und einer Antriebsverteilung anzutreiben. Wenn die Steuerung des Bürstenanpressdrucks über eine Messung des Motormoments bzw. des Motorstroms erfolgt, genügt in einem solchen Fall eine einzelne Messkarte oder eine andere geeignete Messeinrichtung, z.B. eine Frequenzsteuerung in Verbindung mit einem Asynchronmotor. In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: eine Portalwaschanlage in Stirnansicht mit zwei Tandem-Seitenbürsten in verschiedenen Schwenkstellungen,
- Figur 2:: eine Draufsicht auf die Anordnung von Figur 1,
- Figur 3:: eine Seitenansicht gemäß Pfeil III von Figur 2 und
- Figur 4 bis 9:: einen Bürstenüberlauf über ein Fahrzeug mit zwei Tandem-Seitenbürsten in mehreren Schritten.

Die Erfindung betrifft eine Bürstenanordnung (7) für eine Fahrzeugbehandlungsanlage (1) sowie eine damit ausgerüstete Fahrzeugbehandlungsanlage (1).

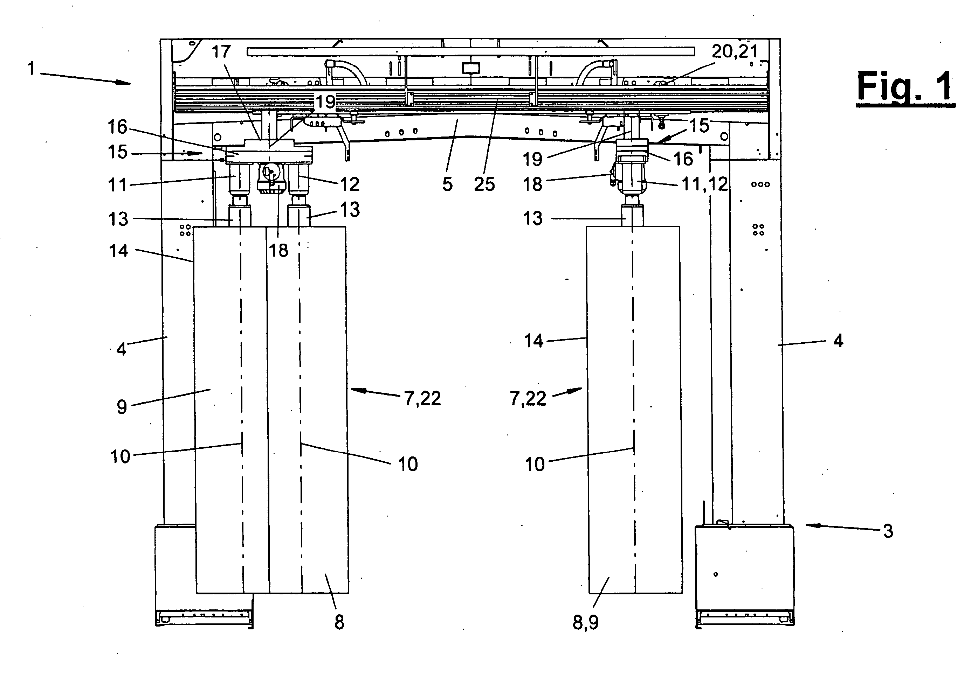

In Figur 1 bis 3 ist eine Fahrzeugbehandlungsanlage (1) in Form einer Portalwaschanlage dargestellt. Die Fahrzeugbahandlungsanlage (1) kann ansonsten eine beliebige andere geeignete Ausbildung haben. Insbesondere kann es sich um eine Doppelportalanlage, eine Taktanlage, eine Autowaschstraße oder dgl. handeln. In der Fahrzeugbehandlungsanlage (1) können beliebige Behandlungsprozesse für ein oder mehrere Fahrzeuge (2) durchgeführt werden. Vorzugsweise sind dies Waschund/oder Polierprozesse. Im bevorzugten und dargestellten Ausführungsbeispiel handelt es sich um eine Fahrzeugwaschanlage.

Die dargestellte Portalwaschanlage (1) besteht aus einem Gestell (3), welches vorzugsweise als U-förmiges Portal ausgebildet sein kann, alternativ aber jede andere beliebige Gestaltung haben kann. Das Portal (3) besitzt zwei seitlich beabstandete und im wesentlichen vertikale Ständer (4) sowie eine die Ständer (4) verbindende und im wesentlichen horizontale Quertraverse (5). Bei einer Portalwaschanlage ist das Portal (3) mit einem Fahrwerk versehen und kann sich auf Schienen oder einer anderen Führung in der durch Pfeile (6) angedeuteten Fahrtrichtung vorwärts und rückwärts gegenüber dem bei Portalwaschanlagen üblicherweise stehenden Fahrzeug (2) bewegen. Wenn das Portal (3) Bestandteil einer Autowaschstraße ist, in der die Fahrzeuge (2) von einer Schleppeinrichtung relativ zum Portal (3) bewegt werden, kann das Portal (3) stationär angeordnet sein oder eine begrenzte Beweglichkeit haben, um ein Stück mit dem geschleppten Fahrzeug mitbewegt zu werden.

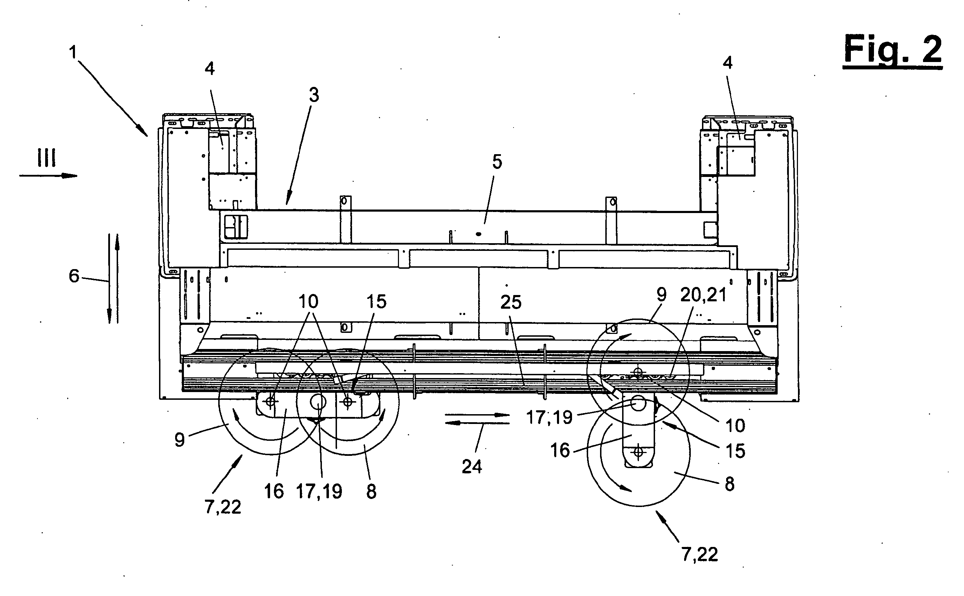

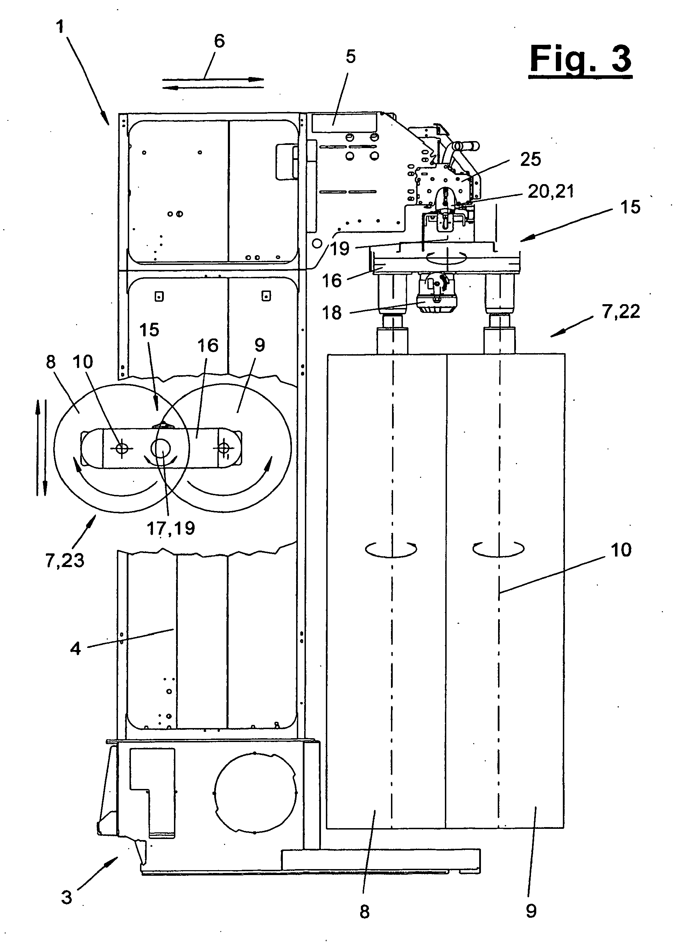

Im Gestell (3) oder Portal sind ein oder mehrere Bürstenanordnungen (7) vorhanden. In der gezeigten Ausführungsform von Figur 1 und 2 sind dies zwei im wesentlichen vertikal ausgerichtete Bürstenanordnungen (7) in Form von Seitenbürsten. Alternativ oder zusätzlich können ein oder mehrere horizontal ausgerichtete Bürstenanordnungen (7) in Form von Dachbürsten vorhanden sein, wie sie in Figur 3 in einem aufgebrochenem Portalbereich dargestellt sind.

Außer den genannten und nachfolgend näher beschriebenen Bürstenanordnungen (7) können ein oder mehrere andere und insbesondere einzelne Bürsten im Gestell (3) oder Portal vorhanden sein. Ferner sind im Gestell (3) oder Portal die anderen üblichen Behandlungsaggregate, wie Auftragvorrichtungen für Reinigungsmittel, Schaum, Spülmittel, Pflegemittel etc. sowie Hochdruckwasch- oder Spüleinrichtungen, Radwaschbürsten, Trockeneinrichtungen und dergl. angeordnet. Sie sind der Übersicht halber nicht dargestellt. Die Fahrzeugwaschanlage (1) hat außerdem eine Steuerung für die besagten Aggregate und für die ein- oder mehrerfach vorhandene Bürstenanordnung (7). Die Steuerung ist ebenfalls der Übersicht halber nicht dargestellt.

Die in Figur 1 und 2 gezeigten Bürstenanordnungen (7) bestehen jeweils aus mindestens zwei drehend angetriebenen Bürsten (8,9) und einer gemeinsamen Bürstenaufhängung (15). In der gezeigten Anordnung von Bürstenpaaren handelt es sich um Tandem-Seitenbürsten (22). Alternativ können auch drei oder mehr Bürsten in einer Bürstenanordnung (7) mit einer gemeinsamen Bürstenaufhängung (15) vorhanden sein. In Figur 3 ist zusätzlich die Variante einer Tandem-Dachbürste (23) mit horizontaler Ausrichtung der Bürstenachsen (10) dargestellt.

In den verschiedenen Ausführungsbeispielen der Bürstenanordnung (7) sind die Bürsten (8,9) an mindestens einem gemeinsamen Träger (16) drehbar gelagert, wobei der Träger (16) ein Schwenklager (17) aufweist. Bei den gezeigten Tandem-Seitenbürsten (22) sind die Bürsten (8,9) hängend an einem gemeinsamen Träger (16) gelagert. Bei der in Figur 3 dargestellten Tandem-Dachbürste (23) sind die horizontalen Bürsten (8,9) an beiden Enden an jeweils einem gemeinsamen Träger (16) gelagert, wobei beide Träger (16) ein Schwenklager (17) aufweisen und die Schwenkachsen (19) fluchten.

Wie, Figur 1 bis 3 verdeutlichen, sind die Bürsten (8,9) innerhalb der Bürstenanordnung (7) im wesentlichen parallel und mit einem engen gegenseitigen Abstand angeordnet. Der Abstand kann so klein gewählt werden, dass die Bürsten (8,9) im Drehbetrieb und in der ausgestellten Lage einander berühren oder sogar ineinander greifen. Hierbei ist es günstig, wenn die jeweils benachbarten Bürsten (8,9) gegenläufig rotieren, wie dies in den Zeichnungen durch Pfeile dargestellt ist. Im Kontakt- oder Überlappungsbereich haben sie dadurch die gleiche Bewegungsrichtung.

Die Bürsten (8,9) können in beliebiger Weise ausgebildet sein. Im gezeigten Ausführungsbeispiel bestehen sie jeweils aus einem Bürstentragrohr (13) mit einem darauf außenseitig angebrachten Bürstenbesatz (14). Der Bürstenbesatz (14) kann von beliebiger Art sein. Es kann sich um dünne Fäden oder Bürstenhaare aus Polyethylen oder dergl. handeln. Der Bürstenbesatz (14) kann alternativ aus biegeelastischen Schaumstoffstreifen gebildet werden, welche z.B. aus einem geschlossenporigen Kunststoffschaum, insbesondere einem Polyethylenschaum mit EVA-Weichmacher etc. bestehen. In weiterer Abwandlung kann der Bürstenbesatz (14) aus textilen Streifen, z.B. Filzstreifen, bestehen. Ferner sind Besatzmaterialien in der Form und Art von Waschlappen oder dergl. möglich.

Die Bürsten (8,9) sind um ihre Bürstenachse (10) drehbar gelagert und werden von jeweils eigenständigen Bürstenantrieben (11,12) oder von einem gemeinsamen Bürstenantrieb drehend angetrieben. Die Bürsten (8,9) können außerdem für seitliche Ausweichbewegungen und für die Einnahme von Schrägstellungen oder Kippstellungen ausschwenkbar am gemeinsamen Träger (16) oder mitsamt dem Träger (16) ausschwenkbar am Gestell (3) oder Portal gelagert sein. Hierfür können geeignete Kipplager mit einer im wesentlichen horizontalen Kipp- oder Ausschwenkachse vorhanden sein. Ferner ist es möglich, Knickbürsten. vorzusehen, die ein ein- oder mehrfach abwinkelbares Bürstentragrohr (13) aufweisen.

In der gezeigten Ausführungsform hat jede Bürste (8,9) einen eigenen Bürstenantrieb (11,12) mit einem geeigneten und vorzugsweise steuer- oder regelbaren Motor, insbesondere einem Elektromotor. Dies kann speziell ein frequenzgesteuerter Asynchronmotor sein. Die Motoren können ggf. ein nachgeschaltetes Untersetzungsgetriebe aufweisen. Bei einem frequenzgesteuerten Wechselstrommotor ist dieses entbehrlich. Die Bürstenantriebe (11,12) treiben die benachbarten Bürsten (8,9) mit entgegengesetzten Drehrichtungen an, wobei die Antriebsdrehzahlen vorzugsweise gleich sind und die Bürstenantriebe (11,12) z.B. synchronisiert bzw. auf gleiche Drehzahl geregelt sind.

Bei der Variante eines gemeinsamen Bürstenantriebs kann ein gemeinsamer Antriebsmotor mit einem nachgeschalteten Verteilergetriebe vorgesehen sein, über das die benachbarten Bürsten (8,9) in gegenläufige Drehungen versetzt werden. In den verschiedenen Ausführungsvarianten können der oder die Bürstenantrieb(e) (11,12) auf der gegenüberliegenden Seite des Trägers (16) angeordnet und gelagert sein. Die Bürsten (8,9) können am gemeinsamen Träger (16) oder an den 8ürstenantrieben (11,12) über geeignete Drehlager gelagert und geführt sein.

Der gemeinsame Träger (16) kann in beliebig geeigneter Weise ausgebildet sein. Beispielsweise handelt es sich um einen im wesentlichen geraden Tragbalken, der massiv oder als quaderförmiges Gehäuse ausgestaltet sein kann. Die Bürsten (8,9) sind an den Enden des Trägers (16) gelagert. Das Schwenklager (17) des Trägers (16) befindet sich vorzugsweise in etwa mittig zwischen den Bürsten (8,9). Die Bürstenachsen (10) und die Schwenkachse (19) verlaufen vorzugsweise im wesentlichen parallel.

Der Träger (16) kann einen steuerbaren Schwenkantrieb (18) mit einem Antriebsmotor besitzen, insbesondere einem steuerbaren Elektromotor, der ähnlich wie der motorische Antrieb der Bürsten (8,9) ausgebildet sein kann.

Der Schwenkantrieb (18) kann eine Positioniereinrichtung (nicht dargestellt) aufweisen, welche die Vorgabe und Einnahme beliebig wählbarer Schwenkstellungen und auch eine Anpassung an die Fahrzeuggeometrie ermöglicht. Z.B. können die Bürstenmomente erfasst und verglichen werden, wobei über den Schwenkantrieb (18) eine Nachführung der Schwenklage erfolgt, um die Bürstenmomente und den Bürsteneingriff im wesentlichen gleich zu halten. Der Schwenkantrieb (18) kann bei Bedarf auch weich geschaltet werden, um begrenzte Eigenanpassung der Bürstenanordnung (7) zu erlauben und mechanische Überlastungen zu vermeiden. Alternativ können feste Vorgaben, z.B. mittels Festanschlägen, für bestimmte Schwenkstellungen vorhanden sein, z.B. Längs- und Querausrichtung der Bürstenanordnung (7) relativ zur Fahrzeug- oder Anlagenlängsachse.

In weiterer Abwandlung kann auf einen eigenen Schwenkantrieb (18) verzichtet werden, wobei die Bürstenanordnung (7) sich selbsttätig nach der Fahrzeugkontur dreht und ausrichtet. Im Schwenklager (17) kann zur Vermeidung von Schwingungen eine Dämpfung eingebaut sein. Ferner kann ein Rückstellelement, z.B. eine Feder, vorhanden sein, um die unbelastete Bürstenanordnung (7) und den Träger (16) in eine wählbare definierte Ausgangslage, z.B. in die Längsausrichtung zur Anlagenlängsachse, zu bringen.

Ferner kann der Schwenkwinkel der Bürstenanordnung (7) und des Trägers (16) in seiner Größe und Lage begrenzt werden, z.B. auf weniger als 360°, insbesondere ca. 180°. Dies kann durch geeignete Mittel erreicht werden, z.B. durch Anschläge oder dgl..

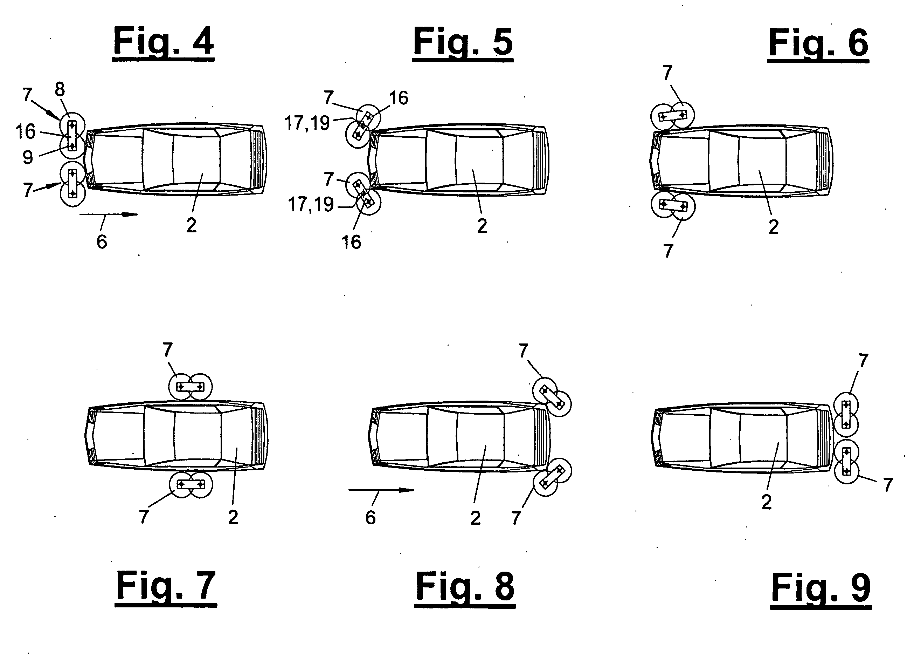

Die Bürstenaufhängung (15) weist ein Laufwerk (20) zur beweglichen Lagerung der Bürstenanordnung (7) im Gestell (3) oder Portal auf. Bei den in Figur 1 bis 3 dargestellten Tandem-Seitenbürsten (22) ist das Laufwerk (20) als Fahrwagen ausgebildet, der an einer im wesentlichen quer zur Portalfahrtrichtung (6) ausgerichteten Laufschiene (25) verfahrbar gelagert ist. Der Fahrantrieb (21) weist einen steuerbaren Motor, insbesondere einen steuerbaren Elektromotor der vorbeschriebenen Art auf. Am Laufwerk (20) ist der Träger (16) mit dem Schwenklager (17), ggf. unter Zwischenschaltung eines Kipplagers, aufgehängt. Der Träger (16) kann über das Schwenklager (17) und den ggf. vorhandenen Schwenkantrieb (18) relativ zum Laufwerk (20) geschwenkt werden. Hierdurch können z.B. die Tandem-Seitenbürsten (22) um z.B. bis zu 360° geschwenkt werden. Der nachfolgend beschriebene Funktionsablauf von Figur 4 bis 9 zeigt diese Schwenkbewegungen. In Figur 1 und 2 sind außerdem die beiden Tandem-Seitenbürsten (22) in zwei um 90° zueinander gedrehten Schwenkstellungen dargestellt.

Die Tandem-Seitenbürsten (22) schwenken um eine im wesentlichen vertikale Schwenkachse (19). Diese Achsenlage kann variieren, wenn die ausweichfähige Lagerung zwischen dem Träger (16) und dem Laufwerk (20) angeordnet ist. Falls die Bürsten (8,9) ausweichfähig am Träger (16) gelagert sind, bleibt die Schwenkachse (19) im wesentlichen vertikal ausgerichtet.

Bei der in Figur 3 angedeuteten horizontalen Tandem-Dachbürste (23) ist die Schwenkachse (19) vorzugsweise im wesentlichen horizontal ausgerichtet. Bei dieser Variante kann der Träger (16) ebenfalls z.B. um bis zu 360° schwenken. Für einen normalen Fahrzeugüberlauf findet ähnlich wie bei den Tandem-Seitenbürsten (22) eine Schwenkbewegung um ca. 180° statt. Die Tandem-Dachbürste (23) ist über eine im wesentlichen vertikale oder schräge Schiene in den beiden Ständern (4) des Portals (3) höhenverstellbar geführt. Hierfür kann eine portalseitige, steuerbare Hubvorrichtung vorhanden sein. Alternativ können auch bei der Tandem-Dachbürste (23) die beiden Träger (16) jeweils mit einem Laufwerk und mit einem gemeinsamen oder mit getrennten Fahrantrieben. (nicht dargestellt) in ähnlicher Weise wie die Tandem-Seitenbürsten (22) versehen sein.

Die Zustellung der Tandembürsten (22,23) an das Fahrzeug (2) erfolgt mittels des Laufwerks (20) und des Fahrantriebs (21) über eine geeignete Konturenerfassung des Fahrzeugs (2), die beliebig ausgestaltet sein kann. Im einfachsten Fall werden die Bürstenzustellung und der Anpressdruck bzw. die Eintauchtiefe der Bürsten (8,9) über eine Messung des Bürstenmoments bzw, des Motormoments oder des Motorstroms realisiert. Hierfür sind die Bürstenantriebe mit einer entsprechenden Messeinrichtung ausgestattet. Bei einem frequenzgesteuerten Asynchronmotor kann der Frequenzumrichter als Messeinrichtung benutzt werden. Die Steuerung bzw. Regelung der Bürstenzustellung und des Fahrantriebs (21) erfolgt über die vorerwähnte Anlagensteuerung, von der alle Antriebe beaufschlagt werden. Alternativ oder zusätzlich ist es möglich, die Fahrzeugkontur nach zwei oder mehr Achsen über entsprechende Abtasteinrichtungen zu erfassen. Die Abtasteinrichtungen können von beliebiger Art und Anordnung sein, wobei eine berührungslose Konturenerfassung, z.B. durch den Laserstrahl eines schwenkbaren Laserscanners mit Abstandsmessung erfolgen kann. Über die Steuerung werden auch der Portalantrieb und die Portalgeschwindigkeit gesteuert bzw. geregelt.

Figur 4 bis 9 verdeutlichen einen Fahrzeugüberlauf des Portals (3) (nicht dargestellt) mit den beiden Tandem-Seitenbürsten (22). Zu Beginn der Fahrzeugwäsche gemäß Figur 4 sind die Tandem-Seitenbürsten (22) und ihre Träger (16) parallel zum beaufschlagten Frontbereich des Fahrzeugs (2) und im wesentlichen quer zur Fahrtrichtung (6) des Portals ausgerichtet und waschen gemeinsam die Fahrzeugfront. Hierbei können sie in üblicher Weise gemeinsam unter Überfahrung der Fahrzeugmitte nach links und rechts bewegt werden, um einen Waschschatten in der Fahrzeugmitte zu vermeiden. Am Ende fahren die Tandem-Seitenbürsten (22) auseinander, wobei sie bei Erreichen der vorderen Fahrzeugecken um die Schwenkachsen (19) zu schwenken beginnen und die Fahrzeugecken umrunden. Durch die Tandem-Anordnung der Bürsten (8,9) bleibt bei dieser Umrundung der Bürstenkontakt mit dem Fahrzeug erhalten, wobei die Tandem-Seitenbürste (22) stabiler in ihrer im wesentlichen vertikalen Hängelage bleibt und sich nicht soweit vom Fahrzeug abhebt, wie dies bei einzelnen Seitenbürsten der Fall sein kann. Figur 5 zeigt diese Eckenumrundung.

Wie Figur 6 verdeutlicht, waschen die Tandem-Seitenbürsten (22) anschließend die Seitenflächen des Fahrzeugs. Aus der Startposition heraus haben sie hierzu mit ihren Trägern (16) eine Schwenkbewegung von ca. 90° durchgeführt. Figur 7 zeigt den weiteren Fortschritt an den Seitenflächen. In Figur 8 haben die Tandem-Seitenbürsten (22) die hinteren Fahrzeugecken erreicht und schwenken um diese herum, wobei sie die Fahrzeugecken unter Beibehaltung des Bürstenkontakts eng umrunden und schließlich die in Figur 9 gezeigte Endstellung am Fahrzeugheck einnehmen. Bei dieser Eckenumrundung findet wiederum eine Schwenkbewegung von ca. 90° statt. Bei der Heckwäsche sind die Tandem-Seitenbürsten (22) wieder quer zur Fahrtrichtung (6) ausgerichtet, so dass sie ausgehend von der in Figur 4 gezeigten Startposition einen Schwenkwinkel von insgesamt ca. 180° vollführt haben.

Wenn auch eine Tandem-Dachbürste (23) vorhanden ist, stellt sich diese mit ihren Trägern (16) und den Bürsten (8,9) bei der Frontwäsche im wesentlichen senkrecht oder schräg und klettert an der Fahrzeugfront nach oben. An der vorderkante der Motorhaube findet dann eine Umrundung und eine Schwenkbewegung um ca. 90° statt, wobei die Träger (16) sich im wesentlichen parallel zum Höhenverlauf der Motorhaube ausrichten. Bei Erreichen der Frontscheibe findet unter Anpassung an deren Neigung eine erneute und diesmal gegenläufige Schwenkbewegung statt, die am oberen Scheibenrand und am Übergang ins Fahrzeugdach wieder zurückgestellt wird. In entsprechender Weise wird die Tandem-Dachbürste (23) bei Überfahren der hinteren Heckscheibe und eines evtl. vorhandenen Kofferraumdeckels sowie des am Ende meist steiler abfallenden Fahrzeughecks geschwenkt. Auch in diesem Fall findet in der Regel eine Gesamtschwenkbewegung von ca. 180° statt.

Bei der Wäsche können sich die permanent nach der Lage und Orientierung des momentan beaufschlagten Fahrzeugbereichs bzw. der Fahrzeugkontur ausrichten und hierzu eine Parallel- oder Tangentiallage einnehmen, wobei sie entsprechende Schwenkbewegungen ausführen. Es wird z.B. angestrebt, dass stets beide Bürsten (8,9) in Kontakt mit dem Fahrzeug (2) sind und in etwa gleiche Eingriffs- und Waschbedingungen haben. Die Lageerfassung kann z.B. über die Ermittlung der Bürsteneintauchtiefe per Momenten- oder Strommessung oder dgl, und über einen vergleich der beiden Bürstenwerte erfolgen. Alternativ kann ein um die Schwenkachse (19) auftretendes Reaktionsmoment erfasst werden. In der Regelung kann die Schwenkstellung über den Schwenkantrieb (18) nachgeführt werden, bis die Eintauchtiefe beider Bürsten (8,9) im wesentlichen gleich groß ist. Alternativ kann die Schwenkstellung über Vorgabewerte aus einer vorab durchgeführten Konturenerfassung gesteuert werden.

Bei der Variante ohne Schwenkantrieb (18) richten sich die Bürstenanordnungen (7) bzw. die Tandem-Bürsten (22,23) durch den Bürsteneingriff am Fahrzeug und das Reaktionsmoment selbsttätig nach der Fahrzeugkontur aus. Die gegenläufigen Antriebsmomente und die evtl. Mittenüberlappung der Bürsten (22,23) können sich hierbei stabilisierend auswirken. An den Eckbereichen des Fahrzeugs (2) wirkt außerdem die Bürstenzustellung unterstützend ein.

Mit den beschriebenen Bürstenanordnungen (7) genügt zum Erzielen des gewünschten Wascherfolgs ein einmaliger Fahrzeugüberlauf. Ein Rücklauf in die in Figur 4 gezeigte Ausgangsposition kann sich anschließen, ist aber nicht unbedingt erforderlich. Statt dessen kann im Rücklauf auch ein Spülvorgang oder ggf. auch gleich ein Trockenvorgang stattfinden.

Abwandlungen der gezeigten Ausführungsformen sind in verschiedener Weise möglich. Zum einen können nur zwei Tandem-Seitenbürsten (22) und eine einzelne Dachbürste in einem Gestell (3) oder Portal vorhanden sein. In weiterer Variation kann eine Tandem-Dachbürste (23) mit zwei einzelnen Seitenbürsten kombiniert werden.

Ferner ist es möglich, statt der Tandem-Bürsten (22,23) Tripple-Bürsten oder andere Bürstenanordnungen (7) einzusetzen. Die drei oder mehr einzelnen Bürsten (8,9) innerhalb der Bürstenanordnung (7) können hierbei wie in den gezeigten Ausführungsbeispielen der Tandem-Bürsten (22,23) in einer im wesentlichen geraden Reihe oder in einer beliebigen anderen räumlichen. Verteilung, z.B. in einem Dreieck, angeordnet sein.

Im weiteren können die gezeigten konstruktiven Ausführungsformen der Bürstenanordnungen (7) und der Bürstenaufhängungen (15) verändert werden. Dies gilt auch für die konstruktive Gestaltung des Trägers (16).

### BEZUGSZEICHENLISTE

- 1: Fahrzeugbehandlungsanlage, Fahrzeugwaschanlage
- 2: Fahrzeug
- 3: Gestell, Portal
- 4: Ständer
- 5: Quertraverse
- 6: Fahrtrichtung Portal
- 7: Bürstenanordung
- 8: Bürste, Waschbürste
- 9: Bürste, Waschbürste
- 10: Bürstenachse
- 11: Bürstenantrieb
- 12: Bürstenantrieb
- 13: Bürstentragrohr
- 14: Bürstenbesatz
- 15: Bürstenaufhängung
- 16: Träger
- 17: Schwenklager
- 18: Schwenkantrieb
- 19: Schwenkachse
- 20: Laufwerk
- 21: Fahrantrieb
- 22: Tandem-Seitenbürste
- 23: Tandem-Dachbürste
- 24: Fahrtrichtung Laufwerk
- 25: Laufschiene

## Patentansprüche

1. Fahrzeugbehandlungsanlage, insbesondere Fahrzeugwaschanlage, mit mindestens einem stationären oder fahrbaren Portal (3) und mit mindestens einer Bürstenanordnung (7), die mindestens zwei drehend angetriebene, im wesentlichen vertikal und hängend gelagerte Bürsten (8,9) mit einer gemeinsamen Bürstenaufhängung (15) aufweist, wobei die Bürsten (8,9) an ein oder beiden Enden an mindestens einem gemeinsamen Träger (16) drehbar gelagert sind und der Träger (16) ein Schwenklager (17) aufweist, wobei die Bürstenanordnung (7) im Portal (3) um das Schwenklager (17) schwenkbar sowie an einer Quertraverse (5) verfahrbar gelagert ist, wobei die Fahrzeugbehandlungsanlage (1) mindestens zwei Bürstenanordnungen (7) mit benachbarten gegenläufig rotierend angetriebenen vertikalen Bürsten (8,9) aufweist, **dadurch gekennzeichnet, dass** die Bürstenaufhängungen (15) der Bürstenanordnungen (7) jeweils ein Laufwerk (20) und einen steuerbaren Fahrantrieb (21) aufweisen und an der Quertraverse (5) des Portals (3) verfahrbar gelagert sind.

2. Fahrzeugbehandlungsanlage nach Anspruch 1, **dadurch gekennzeichnet, dass** die Bürsten (8,9) parallel und mit engem Abstand angeordnet sind.

3. Fahrzeugbehandlungsanlage nach Anspruch 1 oder 2, **dadurch gekennzeichnet, dass** die Bürsten (8,9) im Drehbetrieb einander berühren oder ineinander greifen.

4. Fahrzeugbehandlungsanlage nach Anspruch 1, 2 oder 3, **dadurch gekennzeichnet, dass** die Bürsten (8,9) eigenständige Bürstenantriebe (11,12) aufweisen.

5. Fahrzeugbehandlungsanlage nach einem der Ansprüche 1 bis 3, **dadurch gekennzeichnet, dass** die Bürsten (8,9) einen gemeinsamen Bürstenantrieb aufweisen.

6. Fahrzeugbehandlungsanlage nach einem der vorhergehenden Ansprüche, **dadurch gekennzeichnet, dass** die Bürsten (8,9) ausweichfähig gelagert sind.

7. Fahrzeugbehandlungsanlage nach einem der vorhergehenden Ansprüche, **dadurch gekennzeichnet, dass** der Träger (16) als ein im wesentlichen gerader Tragbalken ausgebildet ist.

8. Fahrzeugbehandlungsanlage nach einem der vorhergehenden Ansprüche, **dadurch gekennzeichnet, dass** das Schwenklager (17) zwischen den Bürsten (8,9) angeordnet ist.

9. Fahrzeugbehandlungsanlage nach einem der vorhergehenden Ansprüche, **dadurch gekennzeichnet, dass** die Bürstenachsen (10) und die Schwenkachse (19) im wesentlichen parallel verlaufen.

10. Fahrzeugbehandlungsanlage nach einem der vorhergehenden Ansprüche, **dadurch gekennzeichnet, dass** der Träger (16) einen steuerbaren Schwenkantrieb (18) aufweist.

11. Fahrzeugbehandlungsanlage nach Anspruch 10, **dadurch gekennzeichnet, dass** der steuerbare Schwenkantrieb (18) eine Positioniereinrichtung zur Vorgabe und Einnahme beliebig wählbarer Schwenkstellungen oder zur Anpassung an die Fahrzeuggeometrie aufweist.

12. Fahrzeugbehandlungsanlage nach einem der vorhergehenden Ansprüche, **dadurch gekennzeichnet, dass** das Laufwerk (20) als Fahrwagen ausgebildet ist, der an einer im wesentlichen quer zur Portalfahrtrichtung (6) oder Fahrzeugschlepprichtung ausgerichteten Laufschiene (25) verfahrbar gelagert ist.

13. Fahrzeugbehandlungsanlage nach einem der vorhergehenden Ansprüche, **dadurch gekennzeichnet, dass** der steuerbare Fahrantrieb (21) und/oder der steuerbare Schwenkantrieb (18) mit einer Konturenerfassung des Fahrzeugs (2) verbunden ist/sind.

14. Fahrzeugbehandlungsanlage nach einem der Ansprüche 4 oder 5 bis 13, **dadurch gekennzeichnet, dass** die Bürstenantriebe (11,12) als frequenzgesteuerte Asynchronmotoren ausgebildet sind, wobei deren Frequenzumrichter als Messeinrichtung zur Erfassung der Bürstenmomente vorgesehen ist.

15. Fahrzeugbehandlungsanlage nach einem der vorhergehenden Ansprüche, **dadurch gekennzeichnet, dass** die Bürsten (8,9) ausweichfähig gelagert oder als Knickbürsten ausgebildet sind

16. Bürstenanordnung nach Anspruch 15, **dadurch gekennzeichnet, dass** die Bürsten (8,9) ausschwenkbar am Träger (16) gelagert sind oder mitsamt dem Träger (16) ausschwenkbar am Gestell (3) gelagert sind.

17. Bürstenanordnung nach Anspruch 15, **dadurch gekennzeichnet, dass** die Knickbürste ein ein- oder mehrfach abwinkelbares Bürstentragrohr (13) aufweist.

18. Fahrzeugbehandlungsanlage nach einem der vorhergehenden Ansprüche, **dadurch gekennzeichnet, dass** die Fahrzeugbehandlungsanlage (1) eine Bürstenanordnung (7) mit im wesentlichen horizontalen und beidseitig gelagerten Bürsten (8,9) aufweist.

19. Fahrzeugbehandlungsanlage nach einem der vorhergehenden Ansprüche, **dadurch gekennzeichnet, dass** die Fahrzeugbehandlungsanlage (1) mindestens zwei als vertikale Tandem-Seitenbürsten (22) ausgebildete Bürstenanordnung (7) aufweist.

20. Fahrzeugbehandlungsanlage nach einem der vorhergehenden Ansprüche, **dadurch gekennzeichnet, dass** die Tandem-Seitenbürsten (22) mit ihren Laufwerken (20) an einer Quertraverse (5) des Portals (3) verfahrbar gelagert sind.

21. Fahrzeugbehandlungsanlage nach einem der vorhergehenden Ansprüche, **dadurch gekennzeichnet, dass** die Fahrzeugbehandlungsanlage (1) mindestens eine als horizontale Tandem-Dachbürste (23) ausgebildete Bürstenanordnung (7) aufweist.

22. Fahrzeugbehandlungsanlage nach Anspruch 21, **dadurch gekennzeichnet, dass** die Tandem-Dachbürste (23) an den Ständern (4) des Portals (3) höhenverstellbar gelagert ist.

23. Verfahren zum Behandeln von Fahrzeugen (2) in einer Fahrzeugbehandlungsanlage (1), insbesondere einer Fahrzeugwaschanlage, mit mindestens einem stationären oder fahrbaren Portal (3) und mit mindestens einer Bürstenanordnung (7), die mindestens zwei drehend angetriebene, im wesentlichen vertikal und hängend gelagerte Bürsten (8,9) mit einer gemeinsamen Bürstenaufhängung (15) aufweist, wobei die Bürsten (8,9) an ein oder beiden Enden an mindestens einem gemeinsamen Träger (16) drehbar gelagert sind und der Träger (16) ein Schwenklager (17) aufweist, wobei die Bürstenanordnung (7) im Portal (3) um das Schwenklager (17) schwenkbar sowie an einer Quertraverse (5) verfahrbar gelagert ist, wobei das Fahrzeug (2) mit mindestens zwei Bürstenanordnungen (7) behandelt wird, deren benachbarte vertikale Bürsten (8,9) gegenläufig drehend angetrieben werden, **dadurch gekennzeichnet, dass** die Bürstenaufhängungen (15) der Bürstenanordnungen (7) jeweils ein Laufwerk (20) und einen steuerbaren Fahrantrieb (21) aufweisen und an einer Quertraverse (5) des Portals (3) verfahren werden.

## Claims

1. Vehicle treatment system, in particular vehicle washing system, having at least one stationary or mobile gantry (3) and having at least one brush arrangement (7), which has at least two rotationally driven brushes (8, 9) which are mounted in a substantially vertical and suspended manner and which have a common brush suspension (15), the brushes (8, 9) being rotatably mounted at one or both ends on at least one common support (16) and the support (16) having a pivot bearing (17), the brush arrangement (7) being mounted in the gantry (3) so as to be pivotable about the pivot bearing (17) and also displaceable on a cross member (5), the vehicle treatment system (1) having at least two brush arrangements (7) with adjacent vertical brushes (8, 9) which are rotationally driven in opposite directions, **characterized in that** the brush suspensions (15) of the brush arrangements (7) in each case have a running gear (20) and a controllable travel drive (21) and are displaceably mounted on the cross member (5) of the gantry (3).

2. Vehicle treatment system according to Claim 1, **characterized in that** the brushes (8, 9) are arranged in parallel and with tight spacing.

3. Vehicle treatment system according to Claim 1 or 2, **characterized in that** the brushes (8, 9) in rotational operation touch one another or mesh with one another.

4. Vehicle treatment system according to Claim 1, 2, or 3, **characterized in that** the brushes (8, 9) have independent brush drives (11, 12).

5. Vehicle treatment system according to one of Claims 1 to 3, **characterized in that** the brushes (8, 9) have a common brush drive.

6. Vehicle treatment system according to one of the preceding claims, **characterized in that** the brushes (8, 9) are mounted so that they can yield.

7. Vehicle treatment system according to one of the preceding claims, **characterized in that** the support (16) is configured as a substantially rectilinear support beam.

8. Vehicle treatment system according to one of the preceding claims, **characterized in that** the pivot bearing (17) is arranged between the brushes (8, 9).

9. Vehicle treatment system according to one of the preceding claims, **characterized in that** the brush axles (10) and the pivot axle (19) extend substantially parallel.

10. Vehicle treatment system according to one of the preceding claims, **characterized in that** the support (16) has a controllable pivot drive (18).

11. Vehicle treatment system according to Claim 10, **characterized in that** the controllable pivot drive (18) has a positioning unit for the specification and assumption of freely selectable pivoting positions or for the adjustment to the vehicle geometry.

12. Vehicle treatment system according to one of the preceding claims, **characterized in that** the running gear (20) is configured as a carriage which is displaceably mounted on a runner rail (25) oriented substantially transversely to the gantry travelling direction (6) or vehicle towing direction.

13. Vehicle treatment system according to one of the preceding claims, **characterized in that** the controllable travel drive (21) and/or the controllable pivot drive (18) is/are connected to a facility for detecting the contour of the vehicle (2).

14. Vehicle treatment system according to one of Claims 4 or 5 to 13, **characterized in that** the brush drives (11, 12) are configured as frequency-controlled asynchronous motors, their frequency inverter being provided as a measuring unit for the detection of the brush torques.

15. Vehicle treatment system according to one of the preceding claims, **characterized in that** the brushes (8, 9) are mounted so that they can yield or are configured as articulated brushes.

16. Brush arrangement according to Claim 15, **characterized in that** the brushes (8, 9) are outwardly pivotably mounted on the support (16) or are outwardly pivotably mounted together with the support (16) on the frame (3).

17. Brush arrangement according to Claim 15, **characterized in that** the articulated brush has a brush support tube (13) which can be angularly deflected at one or more locations.

18. Vehicle treatment system according to one of the preceding claims, **characterized in that** the vehicle treatment system (1) has a brush arrangement (7) with brushes (8, 9) which are mounted in a substantially horizontal manner and on both sides.

19. Vehicle treatment system according to one of the preceding claims, **characterized in that** the vehicle treatment system (1) has at least two brush arrangements (7) which are configured as vertical tandem side brushes (22).

20. Vehicle treatment system according to one of the preceding claims, **characterized in that** the tandem side brushes (22) with their running gears (20) are displaceably mounted on a cross member (5) of the gantry (3).

21. Vehicle treatment system according to one of the preceding claims, **characterized in that** the vehicle treatment system (1) has at least one brush arrangement (7) configured as a horizontal tandem roof brush (23).

22. Vehicle treatment system according to Claim 21, **characterized in that** the tandem roof brush (23) is mounted in a height-adjustable manner on the stands (4) of the gantry (3).

23. Method for treating vehicles (2) in a vehicle treatment system (1), in particular a vehicle washing system, having at least one stationary or mobile gantry (3) and having at least one brush arrangement (7), which has at least two rotationally driven brushes (8, 9) which are mounted in a substantially vertical and suspended manner and which have a common brush suspension (15), the brushes (8, 9) being rotatably mounted at one or both ends on at least one common support (16) and the support (16) having a pivot bearing (17), the brush arrangement (7) being mounted in the gantry (3) so as to be pivotable about the pivot bearing (17) and also displaceable on a cross member (5), the vehicle (2) being treated with at least two brush arrangements (7), the adjacent vertical brushes (8, 9) of which are rotationally driven in opposite directions, **characterized in that** the brush suspensions (15) of the brush arrangements (7) in each case have a running gear (20) and a controllable travel drive (21) and are displaced on a cross member (5) of the gantry (3).

## Revendications

1. Installation de traitement de véhicule, en particulier installation de lavage de véhicule, comprenant au moins un portail stationnaire ou déplaçable (3) et au moins un agencement de brosses (7) qui présente au moins deux brosses (8, 9) entraînées en rotation, montées de manière essentiellement verticale et suspendues avec une suspension de brosses commune (15), les brosses (8, 9) étant montées à rotation au niveau d'une ou des deux extrémités sur au moins un support commun (16) et le support (16) présentant un palier pivotant (17), l'agencement de brosses (7) étant monté dans le portail (3) de manière à pouvoir pivoter autour du palier pivotant (17) et de manière déplaçable sur une traverse (5), l'installation de traitement de véhicule (1) présentant au moins deux agencements de brosses (7) avec des brosses verticales adjacentes (8, 9) entraînées en rotation en sens inverse, **caractérisée en ce que** les suspensions de brosses (15) des agencements de brosses (7) présentent à chaque fois un mécanisme de roulement (20) et un entraînement de conduite commandable (21) et sont montées sur la traverse (5) du portail (3) de manière déplaçable.

2. Installation de traitement de véhicule selon la revendication 1, **caractérisée en ce que** les brosses (8, 9) sont disposées parallèlement et à faible distance.

3. Installation de traitement de véhicule selon la revendication 1 ou 2, **caractérisée en ce que** les brosses (8, 9) sont en contact les unes avec les autres ou s'engagent les unes dans les autres pendant le fonctionnement en rotation.

4. Installation de traitement de véhicule selon la revendication 1, 2 ou 3, **caractérisée en ce que** les brosses (8, 9) présentent des entraînements de brosse autonomes (11, 12).

5. Installation de traitement de véhicule selon l'une quelconque des revendications 1 à 3, **caractérisée en ce que** les brosses (8, 9) présentent un entraînement de brosse commun.

6. Installation de traitement de véhicule selon l'une quelconque des revendications précédentes, **caractérisée en ce que** les brosses (8, 9) sont montées de manière à pouvoir être écartées.

7. Installation de traitement de véhicule selon l'une quelconque des revendications précédentes, **caractérisée en ce que** le support (16) est réalisé sous forme de poutre porteuse essentiellement droite.

8. Installation de traitement de véhicule selon l'une quelconque des revendications précédentes, **caractérisée en ce que** le palier pivotant (17) est disposé entre les brosses (8, 9).

9. Installation de traitement de véhicule selon l'une quelconque des revendications précédentes, **caractérisée en ce que** les axes des brosses (10) et l'axe de pivotement (19) s'étendent essentiellement parallèlement.

10. Installation de traitement de véhicule selon l'une quelconque des revendications précédentes, **caractérisée en ce que** le support (16) présente un entraînement pivotant commandable (18).

11. Installation de traitement de véhicule selon la revendication 10, **caractérisée en ce que** l'entraînement pivotant commandable (18) présente un dispositif de positionnement pour prédéfinir et adopter des positions de pivotement pouvant être sélectionnées de manière quelconque ou pour l'adaptation à la géométrie du véhicule.

12. Installation de traitement de véhicule selon l'une quelconque des revendications précédentes, **caractérisée en ce que** le mécanisme de roulement (20) est réalisé sous forme de chariot déplaçable qui est monté de manière déplaçable sur un rail de roulement (25) orienté essentiellement transversalement à la direction d'avance du portail (6) ou à la direction d'entraînement du véhicule.

13. Installation de traitement de véhicule selon l'une quelconque des revendications précédentes, **caractérisée en ce que** l'entraînement de conduite commandable (21) et/ou l'entraînement pivotant commandable (18) est/sont connectés à un système de détection du contour du véhicule (2).

14. Installation de traitement de véhicule selon l'une quelconque des revendications 4 ou 5 à 13, **caractérisée en ce que** les entraînements de brosse (11, 12) sont réalisés sous forme de moteurs asynchrones commandés en fréquence, dont le convertisseur de fréquence est prévu en tant que dispositif de mesure pour détecter les couples des brosses.

15. Installation de traitement de véhicule selon l'une quelconque des revendications précédentes, **caractérisée en ce que** les brosses (8, 9) sont montées de manière à pouvoir être écartées ou sont réalisées sous forme de brosses pouvant fléchir.

16. Agencement de brosses selon la revendication 15, **caractérisé en ce que** les brosses (8, 9) sont montées de manière à pouvoir être écartées par pivotement sur le support (16) ou sont montées conjointement avec le support (16) de manière à pouvoir être écartées par pivotement sur le bâti (3) .

17. Agencement de brosses selon la revendication 15, **caractérisé en ce que** la brosse pouvant fléchir présente un tube de support de brosse (13) pouvant être coudé une ou plusieurs fois.

18. Installation de traitement de véhicule selon l'une quelconque des revendications précédentes, **caractérisée en ce que** l'installation de traitement de véhicule (1) présente un agencement de brosses (7) avec des brosses (8, 9) montées essentiellement horizontalement et de chaque côté.

19. Installation de traitement de véhicule selon l'une quelconque des revendications précédentes, **caractérisée en ce que** l'installation de traitement de véhicule (1) présente au moins deux agencements de brosses (7) réalisés sous forme de brosses latérales verticales en tandem (22).

20. Installation de traitement de véhicule selon l'une quelconque des revendications précédentes, **caractérisée en ce que** les brosses latérales en tandem (22) sont montées de manière à pouvoir être déplacées avec leurs mécanismes de roulement (20) sur une traverse (5) du portail (3).

21. Installation de traitement de véhicule selon l'une quelconque des revendications précédentes, **caractérisée en ce que** l'installation de traitement de véhicule (1) présente au moins un agencement de brosses (7) réalisé sous forme de brosse de toit en tandem horizontale (23).

22. Installation de traitement de véhicule selon la revendication 21, **caractérisée en ce que** la brosse de toit en tandem (23) est montée de manière réglable en hauteur sur les supports (4) du portail (3).

23. Procédé pour traiter des véhicules (2) dans une installation de traitement de véhicule (1), en particulier une installation de lavage de véhicule, comprenant au moins un portail stationnaire ou déplaçable (3) et au moins un agencement de brosses (7), lequel présente au moins deux brosses (8, 9) entraînées en rotation, montées de manière essentiellement verticale et suspendues avec une suspension de brosses commune (15), les brosses (8, 9) étant montées à rotation au niveau d'une ou des deux extrémités sur au moins un support commun (16) et le support (16) présentant un palier pivotant (17), l'agencement de brosses (7) étant monté dans le portail (3) de manière à pouvoir pivoter autour du palier pivotant (17) et de manière déplaçable sur une traverse (5), le véhicule (2) étant traité par au moins deux agencements de brosses (7) dont les brosses verticales adjacentes (8, 9) sont entraînées en rotation en sens inverse, **caractérisé en ce que** les suspensions de brosses (15) des agencements de brosses (7) présentent à chaque fois un mécanisme de roulement (20) et un entraînement de conduite commandable (21) et sont déplacées sur une traverse (5) du portail (3).
